# EUROPEAN PATENT APPLICATION

(11) **EP 1 324 543 A1**
(43) Date of publication of application: **02.07.2003**
(21) Application number: 02290717.4
(22) Date of filing: 21.03.2002
(51) Int. Cl.: H04L 12/46, H04L 12/56, H04L 12/437

(54) **Method to protect RPR networks of extended topology, in particular RPR ring to ring and meshed backbone networks**

(30) Priority: 26.12.2001 EP 01403365
(71) Applicant: ALCATEL, 75008 Paris (FR)
(72) Inventor: Busi, Italo, 20023 Cerro Maggiore (Milano) (IT); Fontana, Michele, 23878 Verderio Superiore (Lecco) (IT); Grandi, Pietro, 20139 Milano (IT)
(74) Representative: Lamoureux, Bernard

(57) **Abstract**

A method to protect RPR networks of extended topology, in particular RPR Ring-to-Ring and Meshed Backbone networks having a number of RPR rings interconnected according to one or more hierarchical tree structures, in which the protection is carried out at two levels: Intra-Ring Protection, reacting to failures on a single RPR ring; Inter-Ring Protection, reacting to failures that occur between two different RPR rings by using at least two RPR Gateways at the interface between two RPR rings.

## Description

The present invention relates to the field of the RPR (Resilient Packet Ring) networks, and more precisely to a method to protect RPR networks of extended topology, in particular RPR Ring-to-Ring and Meshed Backbone networks, and relating RPR network.

Through the IEEE Standardization Institute, in particular with the draft Standard IEEE 802.17 RPR, a new technology is being defined, designed to optimize the use of the bandwidth available for packets transport on ringlet networks, hereunder called RPR networks, in particular in the context of MAN networks (Metropolitan Area Networks), e.g. described in the article "Resilient Packet Rings for Metro Networks", Global Optical Communication, Pag. 142-146, authors N. Cole, J. Hawkins, M. Green, R. Sharma, K. Vasani, available for public on the Internet site http://www.rpralliance.org/.

The ringlet technology can be based for example either on SDH, Sonet or Ethernet transport physical layers, wherein the RPR networks packets are physically transported.

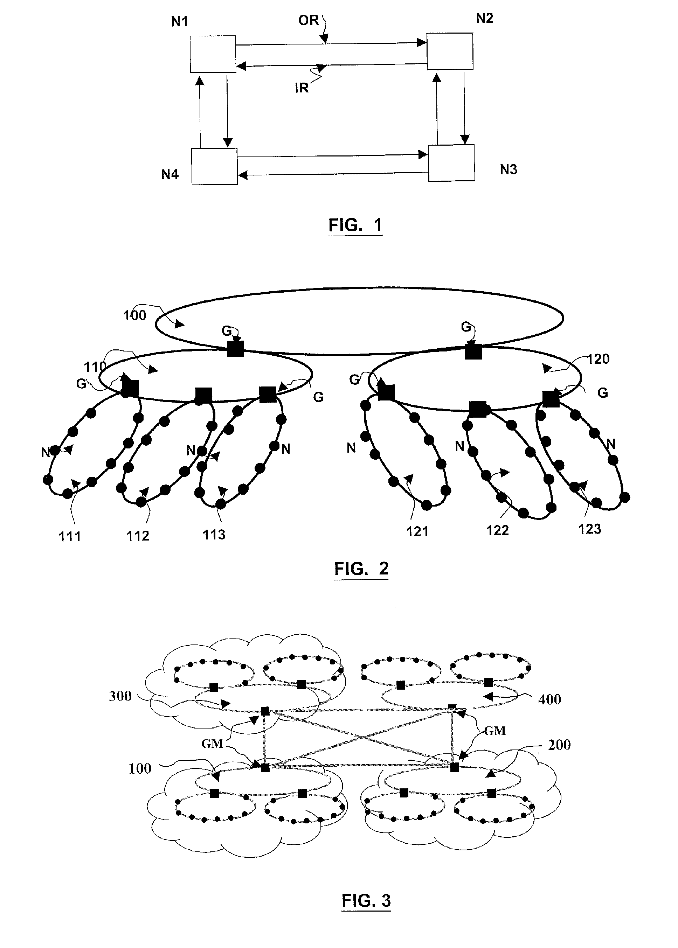

As illustrated in Fig. 1, a known RPR network is based on a configuration of dual counter rotating rings, respectively identified as inner ringlet IR and outer ringlet OR. Both the ringlets are used to carry data and/or control frames of RPR packets between a series of RPR nodes N1, .... N4.

As a RPR packet, it is understood a layer-2 frame of the known ISO-OSI or TCP-IP protocol. The RPR control frames packets are fit for developing the so-called known RPR functions of "topology discovery", "bandwidth management" and "protection switching".

The function of "topology discovery" is based on a mechanism which allows to each RPR ringlet station to identify and localize all the other stations and their distances. When a RPR station inserts a new RPR packet into the ringlet selects the inner or outer ringlet in order to follow the shortest path towards the RPR destination station, under terms of number of RPR stations to be crossed, according to the network topology.

The RPR control packets for "bandwidth management" in the RPR ringlet are used to guarantee an adequate access to the ringlet among the sundry RPR stations, independently from the physical dislocation in the ringlet.

The function of "protection switching" allows to guarantee the so-called "resiliency", that is the protection capacity at level of RPR packet, through a reaction within a pre-established period of time (50 ms) since a fault detection. In case of fault in the RPR network, the RPR control packets of the "protection switching" function are used to implement an APS type protocol (Automatic Protection Switching). There is the support of both the protection mechanisms known as "wrapping protection", conceptually similar to the known MS-Spring SDH system mentioned in the RPR layer, and "steering protection", conceptually similar to the known transoceanic MS-SPRING system mentioned in the RPR level. This as described in the draft standard IEEE 802.17 RPR, chapter 14.

It is known that the RPR frame format comprises one part of header and one part of payload. The part of payload contains the upper layer (usually the Client layer) information to be carried. The header, on the contrary, contains at least the following fields:
- ID address of RPR destination station (MAC address);
- ID address of RPR source station;
- protocol type, in order to identify the upper layer information carried in the payload;
- "time to live" TTL, in order to ensure frames do not circulate forever;
- Ringlet ID, in order to indicate the ringlet (outer or inner) over which the frame has been inserted on the ring;
- CoS, in order to identify the class of service for the RPR frame, that is its priority;
- frame type, in order to distinguish between user data RPR frames, RPR control frames or other RPR specific frames.

As an evolution of the single-ring RPR network of Fig. 1, in the European Patent Application N°. 01 403 368.8 filed by the same applicant on 26-12-2001, it is described a method for interconnecting a number of RPR rings in an extended topology of wide area RPR network which provides for creating a hierarchical tree of RPR rings, where the communications between different RPR rings in the network are allowed only according to the hierarchical tree architecture, through a suitable ring identification.

That application is incorporated herewith as a reference.

In that application, according to claim 1, it is described a method for interconnecting a number of RPR rings in a wide area RPR telecommunication packet network, each ring comprising one or more RPR Nodes, characterized in that it provides for creating a hierarchical tree of RPR rings comprising one or more hierarchical levels of one or more RPR son rings subtended to a respective RPR father ring, whereby packet communications between different RPR rings in the network are allowed only according to the hierarchical tree architecture.

In addition according to claim 4, in that application it is described an RPR packet format to be used for carrying out the method, comprising one part of header and one part of payload, the part of payload containing the upper layer information to be carried, the header part comprising:
- a Standard Header portion, with information relating to: ID address of the RPR destination Node (Standard MAC address); other standard information;
- a Ring Header portion, including fields for: SOURCE RING_ID: identification of the source ring where the packet has been originated; DESTINATION RING_ID: identification of the target ring where the RPR packet has to be addressed, namely Ring Identifier.

Furthermore, with reference to claim 6 of that application, it is described an RPR telecommunications network comprising:
- a number of RPR Rings, each Ring comprising one or more RPR Nodes;
- said RPR Nodes having the function of access devices that receive packets from source customers and groom them on their RPR Ring, or receive packets from their ring and forward them to destination customers;
- RPR Gateways having the function of connecting two or more RPR rings, and selecting the Ring toward which to route the incoming RPR packets, by inspection of the said Ring Identifier.

Furthermore, with reference to claim 12 of that application, it is described an RPR telecommunication network comprising:
- a number of RPR Rings, each Ring comprising one or more RPR Nodes;
- said RPR Nodes having the function of access devices that receive packets from source customers and groom them on their RPR Ring, or receive packets from their ring and forward them to destination customers;
- RPR MAN Gateways having the function of connecting two or more of said hierarchical trees of RPR rings, and selecting the hierarchical tree toward which to route the incoming RPR packets, by inspection of the said Ring Identifier.

The known protection mechanisms of the RPR packets in the RPR single-ring network, as described for example in the above cited draft IEEE 802.17 RPR standard, have to intervene in order to solve the fault situations in a very short period of time, typically 50 ms.

In the new kind of extended topology of RPR network, the protection mechanism as known for the application in the RPR single-ring framework is not applicable, therefore the problem to be solved by the present invention is how to create a protection mechanism for the above RPR networks of extended topology, in particular RPR Ring-to-Ring and Meshed Backbone networks.

Therefore, the purpose of the present invention is to eliminate all the above said drawbacks and to indicate a method to protect RPR networks of extended topology, in particular RPR Ring-to-Ring and Meshed Backbone networks, in which the protection is carried out at two levels:
- Intra-Ring Protection: required to react to failures on a single RPR ring;
- Inter-Ring Protection: required to react to failures that occur between two different RPR rings.

According to the invention, in the RPR network of extended topology, the protection is carried out the following way:
- Intra-Ring Protection is assured by the RPR protection enforced at Layer 2: it reacts to both Link and Node failure;
- Inter-Ring Protection is assured by the Single-Ring Protection, as fas as failures on the single ring are concerned. Typically the Inter-Ring- Protection occurs when an RPR Gateway get failed. In fact the RPR Gateway is part of two RPR rings at the same time. By inserting at least two RPR Gateways at the interface between two RPR rings, then the protection mechanism is robust to both link and gateway failure.

In the case of RPR Meshed Backbone networks, it is also required to have at least two RPR MAN Gateways in every RPR MAN. In addition different RPR MAN Gateways on the same RPR MAN have to be associated to different Meshed Backbone networks.

In order to achieve this purpose, the subject of the present invention is a method to protect RPR networks of extended topology, in particular RPR Ring-to-Ring and Meshed Backbone networks, a relating RPR network and also a RPR gateway suitable to the implementation of the method, as described in the claims, which are an integrating part of the present description.

The main advantages introduced by the present invention are the following:

It is possible to give the customers an End-to-End service protection within 50ms in any case and for any number of RPR rings interconnected.

If the RPR "path" travels along n different RPR rings, the protection mechanism grants an end-to-end protection of 50 ms also in case of up to n failures, affecting different crossed rings.

It does not require the installation of any external device in the Central office cabinets. This has two main advantages: space and management (transport operators are not required to manage another different box).

The service provider is able to give its customers an end-to-end transparent layer 2 service connectivity.

The protection procedure does not require further corrective actions by the algorithm of "topology discovery" to detect the presence of a fault and its localization.

The present invention shall be really clear thanks to the hereinafter detailed description, supplied by way of a non-limiting example as set out in the appended Figures, wherein:
- Fig. 1 shows the structure of a known RPR single-ring network above described;
- Fig. 2 shows an example of a hierarchical tree of RPR Ring-to-Ring network;
- Fig. 3 shows an example of a very wide area RPR Meshed Backbone network;
- Fig. 4 shows an example of intra-ring protection according to the invention;
- Fig. 5 shows an example of inter-ring protection according to the invention;
- Figs. 6 and 7 show alternative structures of protection for a very wide area RPR Meshed Backbone network according to the invention.

In Fig. 2 it is shown an example of a hierarchical tree of RPR rings 100, ........ 123, as described in EP - 01 403 368.8.

Every RPR ring comprises a number of RPR Nodes N, and is connected to other RPR rings through RPR Gateways G:
- RPR Nodes N have the function of access devices that receive traffic from customers and groom it on an RPR ring, or receive traffic from the ring and forward it to the destination customers.
- RPR Gateways G have the function of connecting two (or even more) RPR rings. It has to be noted that an RPR Gateway can also perform the function of RPR Node.

Communications between different RPR rings in the network are allowed only in a vertical way. With this hypothesis, only hierarchical interactions between RPR rings are allowed.

For example, if an RPR ring 111 has to communicate with another RPR ring 112 of the same hierarchical level (both RPR rings are sons of the same father 110), the communication will be through the upper layer ring (father 110) and not directly. In general, the communication between two RPR rings will be through the common father.

In the framework of an RPR ring-to-ring network, two coordinates are required in order to locate the destination point where the RPR packet has to be stripped from the RPR network. They are:
- The destination Ring_ID, assigned in a hierarchical way, so as each RPR ring is addressed by a ring identifier Ring_ID;
- The destination RPR Node, assigned in a known way as Standard (802.17) MAC address.

As described in EP - 01 403 368.8, a modified format of RPR packet is used: with respect to a known RPR packet format, comprising a Standard HEADER part including the MAC address of the destination RPR node, a modified RING HEADER portion is added in the RPR packet header to insert the following data:
- SOURCE RING_ID: identification of the source ring where the packet has been originated;
- DESTINATION RING_ID: identification of the target ring where the RPR packet has to be addressed;
- PROTOCOL TYPE: identifies the upper layer information carried in the Payload;
- HEC: supplementary field for error correction bits.

In the overall network, for example as shown in Fig. 2, every node has a unique MAC address. The procedure for assigning the unique MAC address to each node is known and subject of the IEEE 802.17 RPR standard.

Every ring has a unique RING_ID as well; the procedure for assigning the RING_ID to each ring must keep into account the hierarchical tree structure as explained above.

As to the constitution of the RPR Nodes and RPR Gateways, normally the Packet Header is added (in the upstream direction) or taken away (in the downstream direction) in an RPR node. Every RPR Node has also to insert (or to take away) the Ring Header part in addition to the known Standard Header part. This can be made with normal circuitry at the reach of the skilled in the art (e.g. the Source RING_ID and the Destination RING_ID are selected by the operator at the connection set-up). The HEC bits are calculated in a known way using a state-of-the-art correction code.

As said above, an RPR Gateway can also perform the function of an RPR Node, so that in the implementation a real RPR Gateway can perform the above logic functions of both RPR Node and Gateway.

An RPR Gateway behaves like a ring selector for the incoming RPR packets. Its constitution can be very similar to that of an RPR Node carrying out the destination selection for stripping the packet from the ring. In the RPR Gateway, stripping means routing the packet either to the upper level ring or to the lower level ring, according to the hierarchical tree structure. The choice is made looking at the Destination RING_ID of the Ring Header instead of the MAC address of the Standard Header. The RPR Gateway is configured by the operator when installed in the network with the mask bits of the subtended rings only. Therefore also the constitution of the RPR Gateway is at the reach of the skilled in the art, once the above explanation is known.

In Fig. 3 it is represented an alternative solution in the case of RPR very wide area networks, like WAN (Wide Area Networks) or meshed backbone regional/national networks, to be implemented at the RPR level, where a partly modified RPR Gateway can be used, hereinafter called RPR MAN Gateway. In the upper hierarchical level the RPR MAN Gateways GM are interconnected through point-to-point links among them instead of an RPR ring.

Every RPR MAN Gateway GM subtends a hierarchical tree of RPR Rings like in the non limiting example of Fig. 2, (in Fig. 3 rings 100, 200, 300, 400 respectively) with any number of hierarchical levels, even one only.

Each RPR MAN Gateway GM and its subtended RPR rings are identified by a particular value of the RPR Ring_ID Mask as defined above.

The RPR MAN Gateway is therefore an RPR device that receives an RPR packet and according to the information contained in the packet header is able to forward it either on the same RPR ring or toward another RPR MAN Gateway and its subtended hierarchical tree of RPR Rings.

It is not required that all RPR MAN Gateways have to be interconnected as in a complete graph in order to ensure the complete data interconnection.

When an RPR MAN Gateway GM detects an RPR packet, it looks at the Ring_ID Mask. If it is the Ring_ID Mask of the local RPR ring, then the packet is forwarded along the RPR ring toward the next RPR device, otherwise, according to the value of the Ring_ID Mask the packet is forwarded to the proper point-to-point link that leads to the destination hierarchical tree of RPR Rings via the proper RPR MAN Gateway.

As to the constitution of the RPR MAN Gateway, it is very similar to the one of a RPR Gateway as described above, with the only difference that the RPR MAN Gateway can route an incoming packet to one of a number of other RPR MAN Gateways, instead of one subtended RPR ring.

The RPR MAN Gateway is configured by the operator when installed in the network with the mask bits of the other RPR MAN Gateways and their subtended RPR Rings.

Therefore also the constitution of the RPR MAN Gateway is at the reach of the skilled in the art, once the above explanation is known.

The method of the present invention will be now described.

In the non limiting example of RPR Ring-to-Ring architecture a simple protection mechanism can be applied. Protection is required at two levels:
- Intra-Ring Protection: required to react to failures on a single RPR ring.
- Inter-Ring Protection: required to react to failures that occur between two different RPR rings.

Intra-Ring Protection can be assured by the RPR protection enforced at Layer 2, as for the single ring. It reacts to both Link and Node failure.

It can be implemented as described in the draft standard IEEE 802.17, chapter 14. The implementation is therefore at the reach of a skilled man without difficulty.

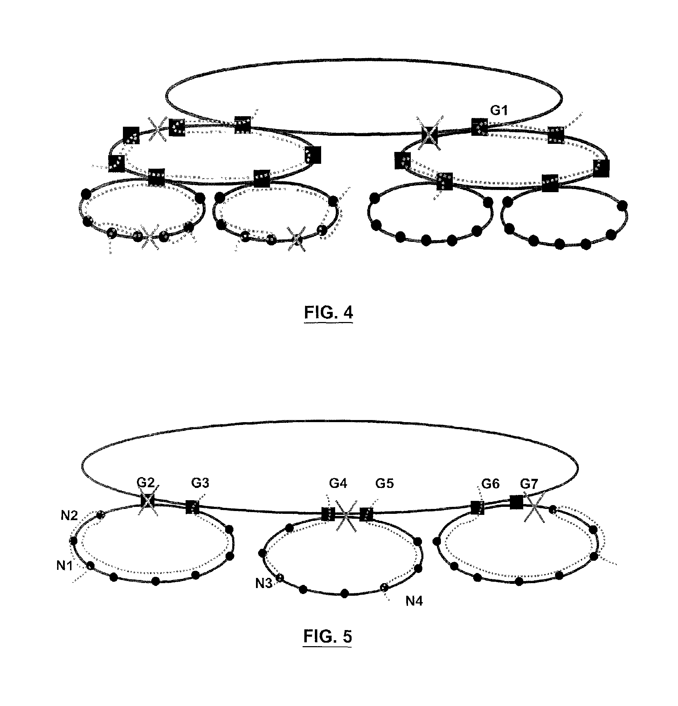

With reference to Fig. 4, generally, as known, a RPR Single Ring is composed of two counter-rotating rings. If a node equipment or link fiber facility failure is detected, traffic going towards and from the failure direction is routed back to go in the opposite direction on the other ring of the pair (inner or outer ring, as from Fig. 1).

As said above, the two known techniques for re-routing packets in case of failure are "wrapping" and "steering":
- wrapping takes place on the nodes adjacent to the failure (as shown in Fig. 4), under control of the protection switch protocol; the wrap re-routes the traffic away from the failed span;
- steering takes place in the originating node.

If the Intra-ring protection affects a RPR Gateway (for example G1 in Fig. 4), this behaves like two independent nodes: a first node for the lower level ring, a second node for the upper level ring of the hierarchy. Each node of the two performs Intra-ring Protection independently.

Typically the Inter-Ring-Protection occurs when an RPR Ring Gateway gets failed. In fact the RPR Ring Gateway is part of 2 RPR rings at the same time. According to an aspect of the present invention, with reference to Fig. 5, at least two RPR Ring Gateways (G2, ..... G7) are inserted between two RPR rings: this way, if one of the two RPR Gateways or the link between the two Gateways fails, the traffic can be rerouted through the other Gateway of the pair.

More particularly, traffic going towards and from the failure direction where the failed RPR Gateway or link is, and destined to another ring of the RPR network, is routed back to go in the opposite direction on the other ring of the pair, so as to reach the other RPR Gateway of the pair through the other direction. The other RPR Gateway detects the traffic destined to the other RPR ring and forwards it accordingly.

For example, in case of failure of one of the two RPR Gateways of a pair, G2 in Fig. 5, the traffic coming from node N1 and destined to the upper ring, is wrapped back in node N2 to reach RPR Gateway G3 in the opposite direction on the other ring of the pair.

In case of failure of the link between two RPR Gateways, G4 and G5 in Fig. 5, the traffic coming from node N3 and destined to the upper ring, reaches RPR Gateway G4 which forwards it to the upper ring in the direction opposite to that of the failed link. The same happens for traffic coming from node N4 and reaching RPR Gateway G5.

Therefore the protection mechanism is robust to both link and gateway failure.

In the non limiting example of a RPR WAN architecture of meshed backbone network, a simple Layer 2 protection mechanism can be applied as well.

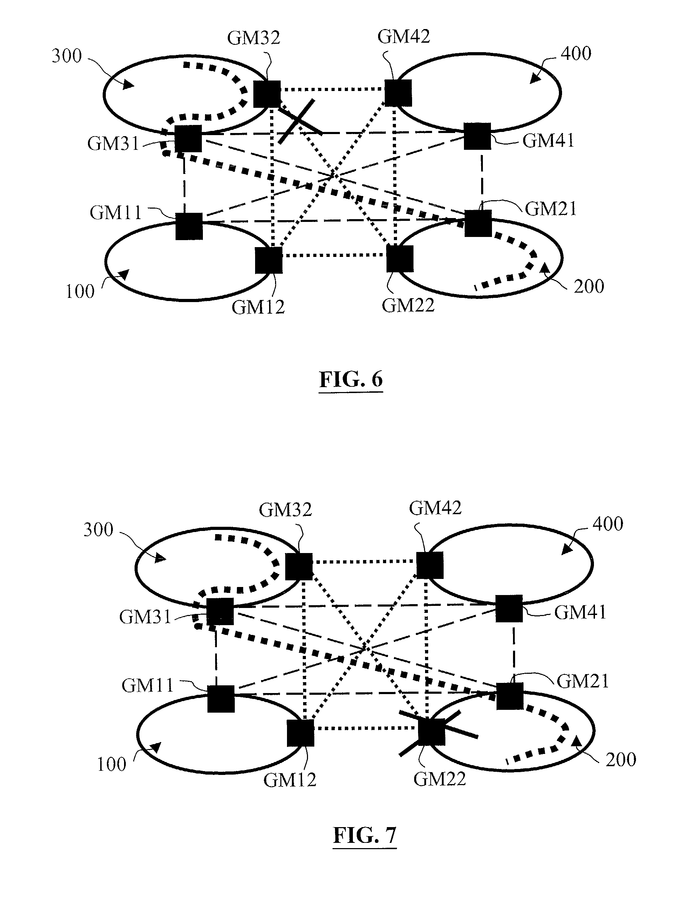

In order to ensure the layer 2 protection in the RPR WAN Meshed Backbone network, according to another aspect of the present invention, with reference to Figs. 6 and 7, it is required to have at least 2 RPR MAN Gateways in every RPR MAN.

In addition different RPR MAN Gateways on the same RPR MAN have to be associated to different Meshed Backbone networks, as everything needs to be redundant, so there will be two Meshed Backbone networks as well.

For example in Fig. 6 and 7 there are two different RPR MAN Gateways in each RPR MAN, each one referring to a different RPR Meshed backbone Network: dashed line network connecting RPR MAN Gateways GM11, GM21, GM31 and GM41, and dotted line network connecting RPR MAN Gateways GM12, GM22, GM32 and GM42.

Generally, in normal conditions the first RPR MAN Gateway that intercepts an RPR packet destined to another hierarchical tree sends it to the corresponding RPR MAN Gateway of the other hierarchical tree along to corresponding RPR Meshed backbone Network. So, in general, the packets will flow either through the dashed RPR Meshed Backbone Network or the dotted RPR Meshed Backbone Network.

In conditions where a failure comes up, affecting the link between two RPR MAN Gateways of different hierarchical trees of a given RPR Meshed Backbone Network, that packet is destined to a non reacheable hierarchical tree of RPR rings through that RPR Meshed Backbone Network, so the RPR MAN Gateway passes the packet to the next hop in the same ring, so as it can reach the other RPR MAN Gateway of the pair, where the sending can be performed regularly through the other RPR Meshed Backbone Network.

In the example of Fig. 6, when the dotted backbone link between RPR MAN Gateway GM32 of RPR MAN "300" and GM22 of RPR MAN "200" fails, the RPR MAN Gateway GM32 deletes its route to MAN "200", so all RPR packets destined to RPR MAN "200" coming at this RPR MAN Gateway GM32 are forwarded along the same ring of RPR MAN "300" toward the next RPR MAN Gateway GM31, up to reach the other RPR MAN Gateway GM21 through the dashed backbone link. This latter RPR MAN Gateway 21 is not informed about the failure on the dotted RPR Meshed Backbone Network. The RPR packet reaches its final RPR MAN destination through the dashed RPR Meshed Backbone Network, instead of through the dotted RPR Meshed Backbone Network.

In the example of Fig. 7, when the remote RPR MAN Gateway GM22 on dotted RPR Meshed Backbone Network connected to RPR MAN "200" fails, the RPR MAN Gateway GM32 on RPR MAN "300" deletes its route to MAN "200", so all the RPR packets destined to RPR MAN "200" coming at this RPR MAN Gateway are forwarded along the same ring of RPR MAN "300" toward the next RPR MAN Gateway GM31, up to reach the other RPR MAN Gateway GM21 connected to the dashed RPR Meshed Backbone Network.

Therefore an RPR MAN Gateway performs the following logical operations:
*If* the RPR packet is destined to the same subtended hierarchical tree of RPR rings,
*Then* the RPR packet is passed to the next hop in the same ring,
*Else If* the RPR packet is destined to another reachable hierarchical tree of RPR rings,
*Then* the packet is sent to the matched subtended hierarchical tree of RPR rings,
*Else* the packet is passed to the next hop in the same ring.

An example of procedure for a RPR MAN Gateway to become aware of the failure of the link between two RPR MAN Gateways of different hierarchical trees of a given RPR Meshed Backbone Network is the following.

Every RPR MAN Gateway keeps updated an internal table with the status of availability of all the routes starting from it.

The RPR MAN Gateways exchange periodical short "hallo" messages between them very frequently and quickly (every 1ms). If an RPR MAN Gateway does not receive a number of consecutive "hallo" messages from another given RPR MAN Gateway, it puts the status of unavailability of that route in the table. This way every packet destined to that route is passed to the next hop in the same ring till when the reachability is reestablished. The format of the "hallo" messages can be as the above referred RPR packet format.

The present invention extends also to a RPR network of extended topology, in which the method is carried out, and to relating RPR Gateways suitably modified for the implementation of the method.

From the above description, the skilled in the art is able to implement such a method, RPR network and RPR Gateways subject of the invention, without introducing further explanations and by utilizing the standard know-how of the already known RPR technology.

## Claims

1. Method for the protection of a RPR packet network of extended topology, in particular RPR Ring-to-Ring and Meshed Backbone networks, said network having a number of RPR rings interconnected according to one or more hierarchical tree structures, whereby packet communication between different RPR rings in the network is taking place according to said hierarchical tree structure, each RPR ring being composed of a pair of counter-rotating rings and comprising one or more RPR Nodes interconnected by links, the RPR rings being interconnected by RPR Gateways,
**characterized in that** it provides the steps of:
- Intra-Ring Protection, by reacting to both Link and Node failures on a single RPR ring, so as if a node or a link failure occurs, packets going towards and from the failure direction are routed back to go in the opposite direction on the other ring of the pair;
- Inter-Ring Protection, by reacting to failures occurring between two different RPR rings, by using at least two RPR Gateways at the interface between two RPR rings.

2. Method as in claim 1, **characterized in that** in the step of Intra-Ring protection a RPR Gateway behaves like two independent nodes: a first node for the lower level ring, a second node for the upper level ring of the hierarchy, each node of the two performing Intra-ring Protection independently.

3. Method as in claim 1 or 2, **characterized in that** in step of Inter-Ring Protection, if one of the RPR Gateways at the interface between two RPR rings or the link between those Gateways fails, the packets are rerouted through the other RPR Gateways, so as packets going towards and from the failure direction where the failed RPR Gateway or link is, are routed back to go in the opposite direction on the other ring of the pair, so as to reach another of said RPR Gateways through the other direction, said another RPR Gateway detecting the packets destined to the other RPR ring and forwarding them accordingly.

4. Method as in any of claims 1 to 3, **characterized in that** in the step of Inter-Ring Protection, in the case of RPR Meshed Backbone network, connecting two or more of said hierarchical trees of RPR rings through RPR MAN Gateways (GM) and relating links, the said RPR MAN Gateways selecting the hierarchical tree and the link toward which to route the incoming RPR packets:
- at least two RPR MAN Gateways are used in every hierarchical tree,
- different RPR MAN Gateways of the same hierarchical tree are associated to different RPR Meshed Backbone networks, so as to have as many RPR Meshed Backbone networks as RPR MAN Gateways in every hierarchical tree.

5. Method as in claim 4, **characterized in that** in the step of Inter-Ring Protection, in case of failure affecting the link between two RPR MAN Gateways of different hierarchical trees of a given RPR Meshed Backbone Network, the packets destined to transit through that link are passed on by the involved RPR MAN Gateway in the same ring, so as to reach another RPR MAN Gateway of the same ring, where the sending to the other hierarchical tree is performed regularly through said another RPR Meshed Backbone Network.

6. Method as in claim 5, **characterized in that** in the step of Inter-Ring Protection said failure affecting the link between two RPR MAN Gateways of different hierarchical trees of a given RPR Meshed Backbone Network is detected by:
- keeping updated a table in every RPR MAN Gateway with the status of availability of all the links starting from it;
- exchanging periodical "hallo" messages between all the RPR MAN Gateways, so as if an RPR MAN Gateway does not receive a number of consecutive "hallo" messages from another given RPR MAN Gateway, it puts the status of unavailability of that link in the table, and every packet destined to that link is passed to the next hop in the same ring.

7. RPR telecommunications packet network of extended topology, for the implementation of the method of any of claims 1 to 6, comprising:
- a number of RPR Rings, each Ring comprising one or more RPR Nodes (N);
- at least two RPR Gateways (G) at the interconnection of different rings, each of said RPR Gateways (G) comprising means for the implementation of the said Intra-ring and Inter-ring protection.

8. RPR telecommunications packet network as in claim 7, further comprising in the case of RPR meshed backbone network:
- at least two RPR MAN Gateways in every hierarchical tree, said RPR MAN Gateways interconnecting said hierarchical trees of RPR rings
- a number of RPR Meshed Backbone networks, different RPR MAN Gateways of the same hierarchical tree being associated to different RPR Meshed Backbone networks, so as to have as many RPR Meshed Backbone networks as RPR MAN Gateways in every hierarchical tree, each of said RPR MAN Gateways comprising means for the implementation of the said Intra-ring and Inter-ring protection.

9. RPR Gateway (G) for the implementation of the method of any of claims 1 to 6, placed at the interconnection of different RPR rings of a hierarchical tree, comprising:
- means for performing Intra-ring Protection in each of the interconnected rings;
- means for performing Inter-Ring Protection, by detecting packets coming from a given ring and destined to the other RPR ring and forwarding them accordingly, said packets being routed back on the other ring of the pair, following a failure of one of the other RPR Gateways at the said interconnection of different RPR rings or of the link between those Gateways.

10. RPR MAN Gateway (GM) for the implementation of the method of any of claims 1 to 6, placed at the interconnection between two or more of said hierarchical trees of RPR rings, comprising means for performing the following operations:
*If* an incoming RPR packet is destined to the same subtended hierarchical tree of RPR rings,
*Then* the RPR packet is passed on in the same ring,
*Else If* the RPR packet is destined to another hierarchical tree of RPR rings through a non-failed link,
*Then* the packet is sent to the matched subtended hierarchical tree of RPR rings through said non-failed link,
*Else* the packet is passed on in the same ring.

11. RPR MAN Gateway (GM) as in claim 10, further comprising:
- means for exchanging periodical "hallo" messages with the other interconnected RPR MAN Gateways;
- means for updating an internal table with the status of availability of all the routes starting from it, namely failed or non-failed link; for putting the status of failed link for the route from where a number of consecutive "hallo" messages are not received and the status of non-failed link again after starting receiving the "hallo" messages again.
